# FASCICULE DE BREVET EUROPEEN

(11) **EP 0 791 424 B1**
(45) Date de publication et mention de la délivrance du brevet: **04.06.2003**
(21) Numéro de dépôt: 97400305.5
(22) Date de dépôt: 11.02.1997
(51) Int. Cl.: B23B 51/04, B25H 1/00, B28D 1/04, B23D 59/02

(54) **Système de carottage pour la réalisation de percage ou de carotte dans les murs en parpaings ou en béton**
Hohlbohrersystem zur Herstellung von Löchern in oder zum Ausschneiden von Kernen aus Wänden aus Beton oder aufgebaut aus Betonblöcken
Tubular sawing system for making holes in or cutting out cores from concrete walls or walls made of concrete blocks

(30) Priorité: 13.02.1996 FR 9601753
(43) Date de publication de la demande: 27.08.1997
(73) Titulaire: Lattanzi, Pietro, 92140 Clamart (FR)
(72) Inventeur: Lattanzi, Pietro, 92140 Clamart (FR)
(74) Mandataire: Debay, Yves

(56) Documents cités:
- EP-A- 0 154 833
- DE-A- 3 434 261
- DE-A- 4 234 935
- FR-A- 2 441 453
- FR-A- 2 552 489
- US-A- 1 859 547
- US-A- 2 914 305
- US-A- 3 293 952
- US-A- 3 663 115
- US-A- 3 922 107
- US-A- 5 393 175
- PATENT ABSTRACTS OF JAPAN vol. 017, no. 565 (M-1495), 13 octobre 1993 (1993-10-13) -& JP 05 162121 A (DAIYU KOA:KK), 29 juin 1993 (1993-06-29)
- PATENT ABSTRACTS OF JAPAN vol. 016, no. 217 (M-1252), 21 mai 1992 (1992-05-21) & JP 04 041114 A (MIYANAGA:KK), 12 février 1992 (1992-02-12)

## Description

La présente invention concerne un système de carottage au diamant tel que décrit dans le préambule de la revendication 1. Un tel système est connu du document US-A-3 922 107.

Il est connu des machines de carottage comportant une semelle de support sur laquelle est montée une colonne support de bloc moteur et d'outil de perçage monté mobile sur la colonne par un boîtier de guidage pour entraîner l'outil de carottage au diamant. Ces dispositifs permettent d'effectuer des perçages importants dans les maçonneries ou les constructions en béton mais présentent l'inconvénient, lorsque l'on effectue un transpercement, de présenter un danger important pour le personnel qui travaille dans les locaux. En effet lorsque l'outil de coupe a traversé la paroi, la carotte de matériau située au centre de l'outil peut se détacher et tomber, ce qui peut provoquer des accidents.

Il est également connu par le document US 3 922 107 un dispositif de carottage prévu pour réaliser des carottes dans des canalisations des eaux usées afin de raccorder des tuyaux à ces canalisations. Le système de carottage est constitué d'une base sur laquelle est montée une colonne de support du bloc moteur et de l'outil de perçage. Le trépan de carottage est tubulaire et se finit par un bord coupant. La carotte est retenue par un ressort en extension fixé à son autre extrémité sur le haut du trépan. Ce ressort comprend à chacune de ses extrémités un oeillet, afin que le ressort ne se torde pas sous l'effet des rotations de l'outil de perçage. Toutefois, un inconvénient de ce dispositif est que le système d'oeillets peut se coincer et entraîner une usure prématurée du ressort.

Un premier but de l'invention est de proposer un système de carottage qui pallie les inconvénients de l'art antérieur et permet d'éviter les risques d'accidents.

Ce but est atteint par le fait que le système de carottage au diamant comporte une semelle de support à chevillage sur laquelle est montée une colonne support de bloc moteur et de l'outil de perçage, ledit bloc moteur étant monté mobile sur un boîtier de guidage solidaire en translation de la colonne, le bloc moteur entraînant par une démultiplication un outil de perçage de trous, l'arbre d'entraînement de l'outil de perçage étant creux et décalé de l'axe du moteur, une tige ou câble de chevillage traversant l'arbre d'entraînement est montée sur des moyens de support pour se fixer par des moyens de fixation indépendants de l'arbre d'entraînement dans la carotte.

Selon une autre particularité les moyens de support sur lesquels est montée la tige ou câble de chevillage sont constitués d'une potence solidaire de l'extrémité de la colonne, la partie supérieure de la tige ou câble passant dans un logement formé sur la potence, la potence étant pourvue de moyens de maintien en déplacement longitudinal de la tige ou câble de chevillage.

Selon une autre particularité les moyens de support sur lesquels est montée la tige ou câble de chevillage sont constitués d'un tréteau, la partie supérieure de la tige ou câble de chevillage passant dans un logement formé dans la barre supérieure du tréteau, la barre supérieure du tréteau étant pourvue de moyens de maintien en déplacement longitudinal de la tige ou câble de chevillage.

Selon une autre particularité les moyens de fixation sont constitués d'une cheville expansive.

Selon une autre particularité les moyens de fixation sont constitués d'une cheville à branche dépliante passée à travers la cloison dans un perçage.

Un autre but de l'invention est de proposer un système de refroidissement de l'outil.

Ce but est atteint par le fait que l'arbre creux entraîné en rotation par la démultiplication du bloc moteur à une extrémité comporte à l'autre extrémité des moyens d'actionnement d'au moins une pompe aspirante à membrane et à l'autre extrémité un mandrin de fixation de l'outil, la dite pompe à membrane alimentant le creux de l'axe en fluide de refroidissement.

Un autre but de l'invention est de proposer un dispositif permettant de collecter les fluides de refroidissement mélangés aux résidus de perçage.

Ce but est atteint par le fait que la semelle de support comporte une fourche enveloppant à sa base l'outil de perçage et pourvue à sa partie inférieure d'un joint d'étanchéité pour collecter les écoulements d'un fluide de refroidissement mélangé aux résidus de perçage.

Selon une autre particularité la semelle comporte un canal d'aspiration qui débouche dans le centre de la fourche, ledit canal d'aspiration débouchant par un orifice sur la surface externe de la semelle pour permettre le branchement d'un embout de tuyau relié à une installation d'aspiration déportée.

Selon une autre particularité l'extrémité de la fourche comporte des doigts articulés permettant d'élargir le secteur de collecte des fluides en fonction de la taille de l'outil coupant.

Selon une autre particularité le mandrin est un mors de fixation externe sur la surface interne d'un manchon de l'outil coupant.

Selon une autre particularité, le moteur est un moteur électrique ou pneumatique ou hydraulique.

D'autres particularités et avantages de la présente invention apparaîtront plus clairement à la lecture de la description ci-après faite en référence à un mode d'exécution de l'invention donnée à titre d'exemple non limitatif dans lequel :
la figure 1 représente une vue en élévation du système de carottage selon l'invention dans un premier mode de réalisation;
la figure 2 représente une vue en coupe d'une partie du système selon l'invention ;
la figure 3 représente une vue en coupe de la semelle de la machine selon l'invention ;
la figure 4 représente une vue de dessus de la semelle une fois le carter enlevé,
la figure 5 représente une vue en élévation du système de carottage dans un second mode de réalisation de l'invention.

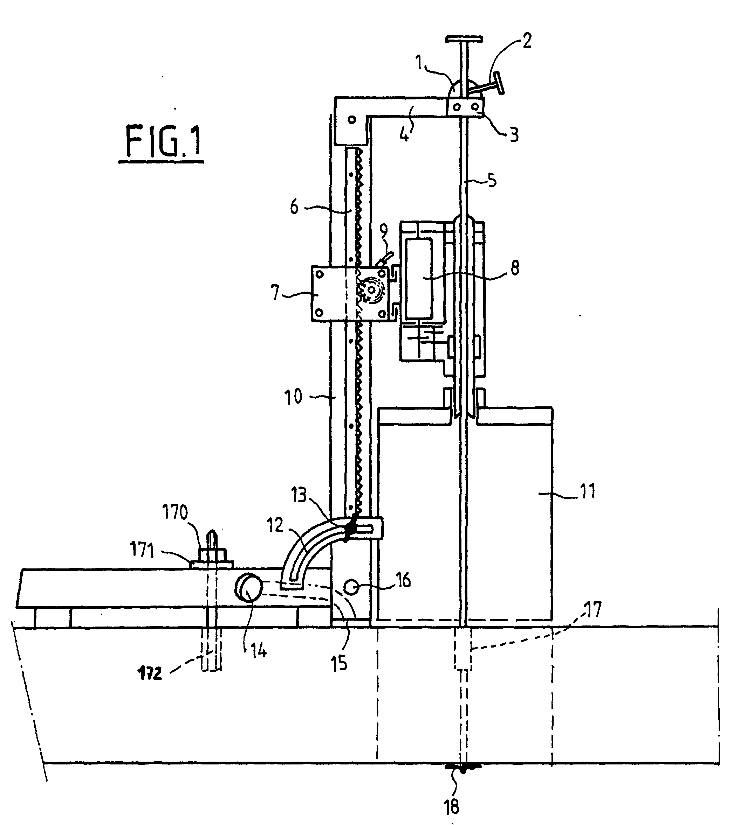

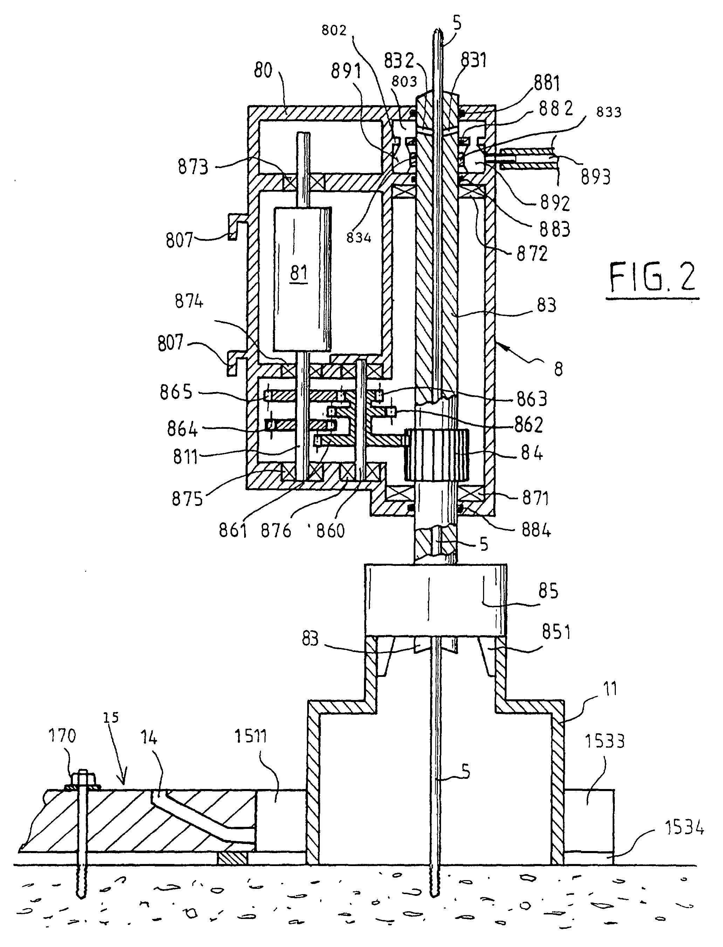

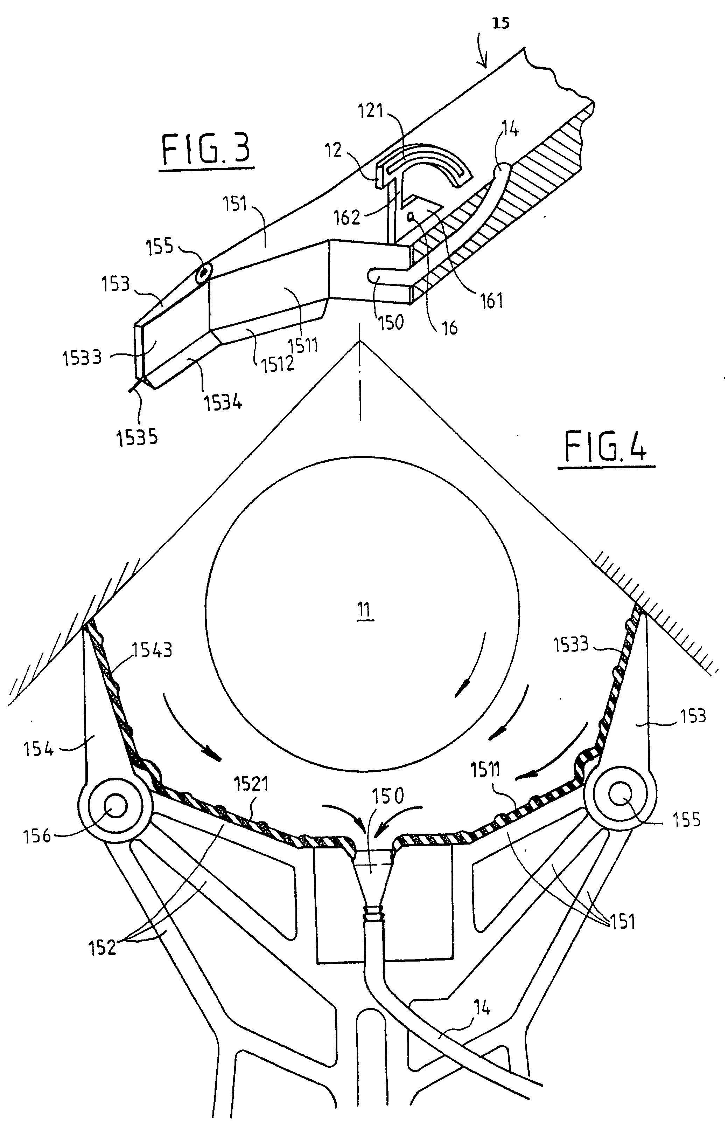

L'invention sera décrite en liaison avec les figures 1 à 4 et concerne une machine de carottage comportant une semelle (15) de support de colonne (10) permettant la fixation et le maintien de la machine sur une paroi à l'aide de chevilles (172) fixées dans des trous formés dans la paroi en béton ou autres matériaux à percer. La machine comporte un système d'écrous (170) et un système (171) permettant de fixer la cheville dans la paroi en permettant la rotation de la tige. L'écrou de blocage (170) permet d'assurer un bon maintien de la semelle (15) sur la paroi de la cloison. Sur cette semelle est montée sur un axe d'articulation (16) et à l'aide d'écrous à papillon (13) pouvant se déplacer dans une lumière (121) formée dans un élément en arc de cercle (12) solidaire de la semelle (15), une colonne (10) support d'un ensemble de perçage (8). Cette colonne (10) comporte une crémaillère (6) sur laquelle engrène le pignon d'un boîtier de guidage (7) qui permet de déplacer de haut en bas l'ensemble de perçage (8). A l'extrémité supérieure de la colonne (10) est montée une potence (4) qui à son extrémité éloignée de la colonne (10) comporte un logement pour une butée à bille (3) sur laquelle vient se monter une pièce tournante (1) de maintien en déplacement longitudinal d'une tige (5) à l'extrémité inférieure de laquelle est montée une cheville expansive (17). Dans une variante l'extrémité de la tige (5) peut comporter une cheville (18) à branche dépliante et dans ce cas là cette tige devra passer à travers un perçage transperçant la totalité de la cloison pour ensuite servir de moyen de retenue. Dans le cas où la cheville (17) est du type expansive un trou borgne formé dans la cloison sera suffisant. Une fois la tige (5) solidarisée à la cloison par la cheville (17) ou la cheville (18) la hauteur de la tige est déterminée par l'écrou de fixation (2). L'ensemble cloison-tige ainsi formé est solidaire en déplacement linéaire de la potence (4). Le bloc de perçage (8) monté sur le boîtier de guidage (7) est représenté plus en détail à la figure 2. Ce bloc (8) peut être solidarisé du boîtier de guidage par deux ergots (807) et comporter dans un carter (80) un moteur électrique (81) avec à la partie supérieure, un logement destiné à recevoir la partie électronique et les éléments permettant la commande du moteur par exemple sans balai. Le moteur est monté sur des roulements (873, 874) et comporte à une autre extrémité de son arbre (811) des pignons d'entraînement (865, 864) de tailles différentes. Bien sûr l'invention ne se limite pas à cet exemple de réalisation. Ainsi, le moteur (81) peut également être un moteur pneumatique ou hydraulique connu de l'homme de métier. Ces deux pignons (865, 864) d'entraînement peuvent engrener avec un des pignons d'un ensemble mobile en fonction du déplacement de cet ensemble mobile formé par trois pignons (863, 862, 861). Le premier (863) engrène avec le premier pignon (865), un deuxième élément d'engrenage (862) pouvant après déplacement latéral engrener avec le deuxième pignon (864) et un troisième élément denté (861) engrenant quelle que soit la position de l'ensemble mobile avec une roue dentée (84) solidaire d'un arbre creux (83) dans le perçage duquel passe la tige (5). Cet arbre creux (83) est monté en rotation sur le carter (80) par des roulements à billes (872, 871). Des joints toriques (884, 883) constituent l'étanchéité de la partie mécanique. Au-dessus de cette partie mécanique, l'arbre (83) comporte deux bossages (833, 834) qui actionnent chacun une petite pompe (891, 892) à membrane, chacune des deux pompes étant alimentée par un tuyau (893) en fluide de refroidissement. Le fluide de refroidissement aspiré par ces pompes à membrane chaque fois que l'un des bossages (833, 834) vient déformer la membrane, sera refoulé à travers un orifice d'une cloison (802) vers un volume creux (803) qui communique avec le perçage central de l'arbre creux (83) à travers des perçages inclinés (831, 832) vers le mandrin (85). Ce volume circulaire (803) est délimité à sa partie haute par un joint d'étanchéité torique (881) et à sa partie basse par un autre joint d'étanchéité torique (882). Ainsi le fluide de refroidissement introduit le long de la tige (5) va s'écouler le long de celle-ci puis se répartir au niveau du sol en s'écartant, pour aller s'introduire dans la découpe circulaire formée par l'outil coupant (11) représenté en coupe sur la figure 2. Cet outil coupant (11) est maintenu sur l'arbre creux (83) par l'intermédiaire d'un mandrin (85) disposant de mors (851) repartis régulièrement à sa périphérie. Ces mors (851) sont actionnés par un mécanisme pour s'écarter et venir fixer l'outil coupant par serrage entre les surfaces externes de ces mors (851) et la surface interne circulaire de l'outil. Le fluide disponible dans la rainure de travail de l'outil coupant à pointe diamant refroidira cet outil et sera ainsi renouvelé pour ressortir vers l'extérieur chargé de boue et de détritus. L'invention permet de récupérer ces détritus grâce à une fourche formée à l'extrémité de la semelle (15). Cette fourche est constituée d'éléments fixes (151, 152) et se prolonge par des doigts orientables (153, 154). Les surfaces des doigts (153, 154) orientées vers l'intérieur de la fourche sont revêtues d'un matériau étanche et souple tel que du caoutchouc et comportent à la partie inférieure disposée à proximité de la surface à découper un bourrelet en V formé par des lèvres (1534, 1512, 1535). Ce bourrelet d'étanchéité s'interrompt au niveau de la partie centrale de la semelle. Cette partie centrale comporte un orifice (150) débouchant dans le centre de la fourche et constituant la bouche d'aspiration. Cette bouche d'aspiration (150) se prolonge vers l'intérieur de la semelle (15) sous forme d'un tuyau (14) dont une extrémité débouche sur la partie supérieure de la semelle en un emplacement qui permet l'introduction d'un embout relié par un autre tuyau à un système d'aspiration déporté. La semelle comporte également une platine (161) de maintien de l'axe (16) de part et d'autre de l'axe de symétrie de la semelle ainsi qu'une platine (12) permettant la circulation dans une lumière (121) de deux écrous papillon (13) montés de part et d'autre de la colonne support (10). Ainsi la colonne support (10), grâce à l'axe (16) et à la lumière (121) dans laquelle les tiges filetées solidaires de la colonne (10) peuvent se déplacer, pourra être orientée selon différentes possibilités d'inclinaison. De même les bras articulés (153, 154) permettent de modifier l'angle d'ouverture de la fourche et de s'adapter ainsi à des diamètres différents de l'outil de coupe (11) ou de venir en contact avec les parois proches de l'élément à percer. Ceci contribue ainsi à renforcer l'effet d'aspiration au niveau de la semelle des fluides de refroidissement.

L'exemple de réalisation décrit ci-dessus n'est nullement limitatif. Ainsi, la tige (5) filetée à l'extrémité inférieure de laquelle est montée la cheville (17, 18), ou tige (5) de chevillage peut être remplacée par un câble en acier de type connu. De la même façon que décrit précédemment, le câble en acier peut être solidarisé à la cloison par une cheville (17) expansive ou une cheville (18) à branche dépliante et la hauteur du câble en acier est déterminée par l'écrou de fixation du système de maintien réglable de la tige ou câble (5). De même, les systèmes de pompes (891, 892) à membrane actionnées par des bossages formés sur l'arbre (83) peuvent être situés au-dessous de la partie mécanique, c'est à dire dans la partie inférieure du bloc (8) de perçage ou en dessous de ce bloc (8) de perçage.

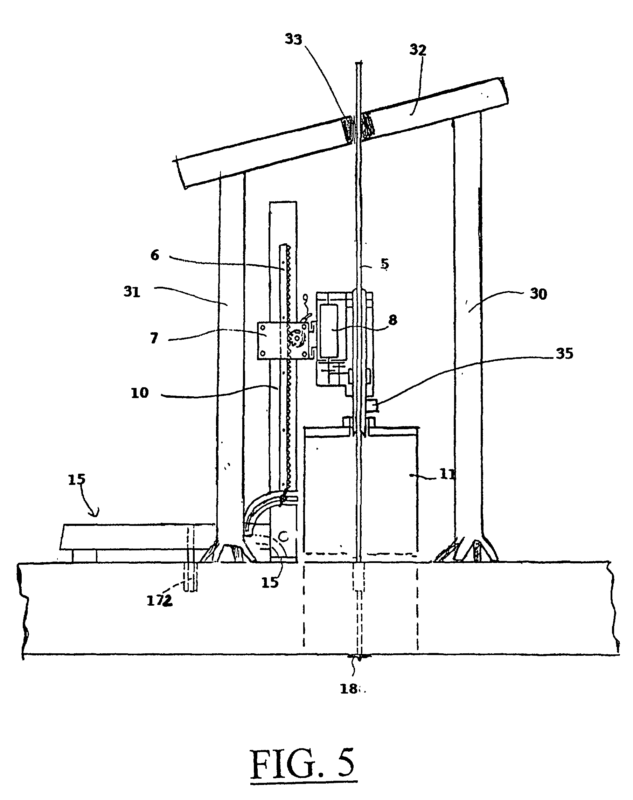

La figure 5 représente une vue en élévation du système de carottage dans un second mode de réalisation de l'invention. Le mode de réalisation de la figure 5 est sensiblement identique à celui de la figure 1, aux seules différences que la tige ou câble (5) de chevillage est montée sur un support constitué d'un tréteau (30-32) escamotable à la place du système à potence et le système de pompe à membrane alimentant le creux de l'axe en fluide de refroidissement est situé en dessous du bloc moteur (8). Les éléments identiques à ceux décrits précédemment sont désignés par les mêmes références numériques. Le tréteau escamotable est constitué d'au moins deux pieds (30, 31) verticaux reposant sur la paroi de béton à l'extérieur de la carotte et portant une barre (32) supérieure ou barre (32) support. La barre (32) support peut être horizontale ou, comme représenté sur la figure 5, inclinée par rapport à l'horizontale et vers le bas en direction de la semelle d'un angle égal par exemple à 40 degrés environ. La partie supérieure de la tige ou câble (5) de chevillage passe dans un logement (33) formé sensiblement au milieu de la barre (32) support du tréteau. De la même façon que la potence de la figure 1, la barre (32) supérieure du tréteau est pourvue de moyens de maintien (non représentés) en déplacement longitudinal de la tige ou câble de chevillage (5). Par exemple, et de la même façon que ci-dessus, la barre (32) supérieure du tréteau comporte un logement (33) pour une butée à bille sur laquelle vient se monter une pièce tournante de maintien en déplacement longitudinal de la tige ou câble (5) et la hauteur de la tige ou câble (5) est déterminée par un écrou de fixation. Le système support de câble ou tige (5) constitué du tréteau supporte le poids de la carotte plus efficacement que le système support à potence décrit ci-dessus.

## Revendications

1. Système de carottage au diamant comportant une semelle (15) de support à chevillage (172) sur laquelle est montée une colonne (10) support de bloc moteur (8) et d'outil de perçage (11), ledit bloc moteur étant monté mobile sur un boîtier de guidage (7) solidaire en translation de la colonne, le bloc moteur entraînant par une démultiplication un outil de perçage de trous, **caractérisé en ce que** l'arbre d'entraînement (83) de l'outil de perçage est creux et décalé de l'axe (811) du moteur (81), une tige ou câble de chevillage (5) traversant l'arbre d'entraînement (83) est montée sur des moyens de support (3, 4; 30, 31, 32) indépendants de l'arbre d'entraînement (83) pour se fixer par des moyens (17, 18) de fixation dans la carotte.

2. Système de carottage selon la revendication 1, **caractérisé en ce que** les moyens de support (3, 4; 30, 31, 32) sur lesquels est montée la tige ou câble de chevillage (5) sont constitués d'une potence (4) solidaire de l'extrémité de la colonne (10), la partie supérieure de la tige ou câble (5) passant dans un logement formé sur la potence (4), la potence étant pourvue de moyens (1, 2, 3) de maintien en déplacement longitudinal de la tige ou câble de chevillage (5).

3. Système de carottage selon la revendication 1, **caractérisé en ce que** les moyens de support (3, 4; 30, 31, 32) sur lesquels est montée la tige ou câble de chevillage (5) sont constitués d'un tréteau (30-31), la partie supérieure de la tige ou câble (5) de chevillage passant dans un logement formé dans la barre (32) supérieure du tréteau, la barre (32) supérieure du tréteau étant pourvue de moyens (33) de maintien en déplacement longitudinal de la tige ou câble de chevillage (5).

4. Système de carottage selon l'une quelconque des revendications 1 à 3, **caractérisé en ce que** les moyens de fixation sont constitués d'une cheville expansive (17).

5. Système de carottage selon la revendication 1 à 3, **caractérisé en ce que** les moyens de fixation sont constitués d'une cheville (18) à branche dépliante passée à travers la cloison dans un perçage.

6. Système de carottage selon l'une quelconque des revendications 1 à 5, **caractérisé en ce que** l'arbre creux entraîné en rotation par la démultiplication (861 à 865) du bloc moteur comporte à proximité de son extrémité inférieure, un mandrin (85) de fixation de l'outil, l'arbre creux comportant également, dans sa partie supérieure ou inférieure, des moyens d'actionnement (834, 833) d'au moins une pompe aspirante (891, 892) à membrane, la dite pompe à membrane alimentant le creux de l'axe en fluide de refroidissement.

7. Système de carottage selon une des revendications 1 à 6, **caractérisé en ce que** la semelle de support comporte une fourche (151 à 154) enveloppant à sa base l'outil de perçage et pourvue à sa partie inférieure d'un joint d'étanchéité (1511, 1533, 1521, 1543) pour collecter les écoulements d'un fluide de refroidissement mélangé aux résidus de perçage.

8. Système de carottage selon la revendication 7, **caractérisé en ce que** la semelle comporte un canal d'aspiration (14) qui débouche dans le centre (150) de la fourche, ledit canal d'aspiration débouchant par un orifice sur la surface externe de la semelle pour permettre le branchement d'un embout de tuyau relié à une installation d'aspiration déportée.

9. Système de carottage selon la revendication 7 ou 8, **caractérisé en ce que** l'extrémité de la fourche comporte des doigts articulés (153, 154) permettant d'élargir le secteur de collecte des fluides en fonction de la taille de l'outil coupant.

10. Système de carottage selon la revendication 6, **caractérisé en ce que** le mandrin (85) est un mors de fixation (851) externe sur la surface interne d'un manchon de l'outil coupant.

11. Système de carottage selon une des revendications 1 à 10 **caractérisé en ce que** le moteur (81) est un moteur électrique ou pneumatique ou hydraulique.

## Claims

1. Coring system with diamond comprising a support sole plate (15) with fastening (172) on which is mounted a support column (10) for a motor unit (8) and the drilling tool (11), said motor unit being mounted so as to be mobile on a guide casing (7) integral in translation with the column, the motor unit driving a hole-drilling tool via reduction gear, **characterised in that** the drive shaft (83) of the drilling tool is hollow and offset from the axis (811) of the motor (81), a fastening cable or rod (5) passing through the drive shaft (83) is mounted on support means (3, 4; 30, 31, 32) independent of the drive shaft (83) in order to be fixed by fixing means (17, 18) in the core.

2. Coring system according to Claim 1, **characterised in that** the support means (3, 4; 30, 31, 32) on which the fastening cable or rod (5) is mounted are constituted by a bracket (4) integral with the end of the column (10), the upper part of the rod or cable (5) passing into a housing formed on the bracket (4), the bracket being provided with means (1, 2, 3) for holding the fastening cable or rod (5) in longitudinal displacement.

3. Coring system according to Claim 1, **characterised in that** the support means (3, 4; 30, 31, 32) on which the fastening cable or rod (5) is mounted are constituted by a trestle (30-31), the upper part of the fastening cable or rod (5) passing into a housing formed in the upper bar (32) of the trestle, the upper bar (32) of the trestle being provided with means (33) for holding the dowelling cable or rod (5) in longitudinal displacement.

4. Coring system according to any one of Claims 1 to 3, **characterised in that** the fixing means are constituted by an expanding pin (17).

5. Coring system according to Claim 1 to 3, **characterised in that** the fixing means are constituted by a pin (18) with a folding branch passed through the partition into a hole.

6. Coring system according to any one of Claims 1 to 5, **characterised in that** the hollow shaft driven in rotation by the reduction gear (861 to 865) of the motor unit has, near its lower end, a clamping chuck (85) for the tool, the hollow shaft also having, in its upper or lower part, means (834, 833) for actuating at least one diaphragm-type suction pump (891, 892), said diaphragm pump supplying coolant to the hollow part of the axis.

7. Coring system according to one of Claims 1 to 6, **characterised in that** the sole plate has a fork (151 to 154) surrounding at its base the drilling tool and provided in its lower part with a seal (1511, 1533, 1521, 1543) for collecting the flow of coolant mixed with the drilling residues.

8. Coring system according to Claim 7, **characterised in that** the sole plate has a suction channel (14), which opens out in the centre (150) of the fork, said suction channel opening out through an opening on the outer surface of the sole plate so as to allow the connection of a pipe end connected to an offset suction installation.

9. Coring system according to Claim 7 or 8, **characterised in that** the end of the fork has articulated fingers (153, 154) making it possible to widen the fluid collection sector depending on the size of the cutting tool.

10. Coring system according to Claim 6, **characterised in that** the chuck (85) is an outer fixing jaw (851) on the inner surface of a sleeve of the cutting tool.

11. Coring system according to one of Claims 1 to 10 **characterised in that** the motor (81) is an electric or pneumatic or hydraulic motor.

## Patentansprüche

1. Diamantenkernbohrsystem mit einer Trägersohle (15) für Dübel (172), auf der eine Trägersäule (10) für einen Motorblock (8) und ein Bohrwerkzeug (11) angebracht ist, wobei der Motorblock beweglich an einem Führungsgehäuse (7) angebracht ist, das mit der Säule translatorisch bewegbar verbunden ist, wobei der Motorblock über eine Untersetzung ein Bohrwerkzeug für Löcher antreibt, **dadurch gekennzeichnet, daß** die Antriebswelle (83) des Bohrwerkzeugs hohl und von der Achse (811) des Motors (81) versetzt ist, wobei eine Dübelungsstange oder ein Dübelungskabel (5), das die Antriebswelle (83) durchquert, an Trägermitteln (3, 4; 30, 31, 32) angebracht ist, die von der Antriebswelle (83) unabhängig sind, um durch Mittel (17, 18) zur Befestigung in dem Bohrkern befestigt zu werden.

2. Kernbohrsystem nach Anspruch 1, **dadurch gekennzeichnet, daß** die Trägermittel (3, 4; 30, 31, 32), an denen die Dübelungsstange oder das Dübelungskabel (5) angebracht ist, aus einem Arm (4) bestehen, der mit dem Ende der Säule (10) fest verbunden ist, wobei der obere Teil der Stange oder des Kabels (5) in einer an dem Arm (4) gebildeten Aufnahme verläuft und der Arm mit Mitteln (1, 2, 3) zum längsverschieblichen Halten der Dübelungsstange oder des Dübelungskabels (5) versehen ist.

3. Kembohrsystem nach Anspruch 1, **dadurch gekennzeichnet, daß** die Trägermittel (3, 4; 30, 31, 32), an denen die Dübelungsstange oder das Dübelungskabel (5) angebracht ist, aus einem Gestell (30 - 31) bestehen, wobei der obere Teil der Dübelungsstange oder des Dübelungskabels (5) in einer in dem oberen Stab (32) des Gestells gebildeten Aufnahme verläuft und der obere Stab (32) des Gestells mit Mitteln (33) zum längsverschieblichen Halten der Dübelungsstange oder des Dübelungskabels (5) versehen ist.

4. Kernbohrsystem nach einem der Ansprüche 1 bis 3, **dadurch gekennzeichnet, daß** die Befestigungsmittel aus einem Spreizdübel (17) bestehen.

5. Kernbohrsystem nach Anspruch 1 bis 3, **dadurch gekennzeichnet, daß** die Befestigungsmittel aus einem Klappdübel (18) bestehen, der durch die Wand in einer Bohrung hindurchgeführt ist.

6. Kernbohrsystem nach einem der Ansprüche 1 bis 5, **dadurch gekennzeichnet, daß** die durch die Untersetzung (861 bis 865) des Motorblocks in Drehung angetriebene hohle Welle in der Nähe ihres unteren Endes ein Befestigungsfutter (85) für das Werkzeug aufweist, wobei die hohle Welle in ihrem oberen oder unteren Teil auch Betätigungsmittel (834, 833) für wenigstens eine Membransaugpumpe aufweist, wobei die Membranpumpe den Hohlraum der Achse mit einer Kühlflüssigkeit versorgt.

7. Kernbohrsystem nach einem der Ansprüche 1 bis 6, **dadurch gekennzeichnet, daß** die Trägersohle eine Gabel (151 bis 154) umfaßt, die an ihrer Basis das Bohrwerkzeug umhüllt und an ihrem unteren Teil mit einem Dichtung (1511, 1533, 1521, 1543) versehen ist, um den Ablauf einer mit den Bohrresten gemischten Kühlflüssigkeit zu sammeln.

8. Kernbohrsystem nach Anspruch 7, **dadurch gekennzeichnet, daß** die Sohle einen Saugkanal (14) aufweist, der im Zentrum (150) der Gabel mündet, wobei der Saugkanal über eine Öffnung an der Außenfläche der Sohle mündet, um den Anschluß eines Schlauchansatzes zu ermöglichen, der mit einer ausgelagerten Sauganlage verbunden ist.

9. Kernbohrsystem nach Anspruch 7 oder 8, **dadurch gekennzeichnet, daß** das Ende der Gabel Gelenkfinger (153, 154) aufweist, durch die der Sammelsektor für Flüssigkeiten in Abhängigkeit von der Größe des Schneidwerkzeugs erweitert werden kann.

10. Kernbohrsystem nach Anspruch 6, **dadurch gekennzeichnet, daß** das Spannfutter (85) eine äußere Befestigungsspannbacke (851) an der Innenfläche einer Muffe des Schneidwerkzeugs ist.

11. Kernbohrsystem nach einem der Ansprüche 1 bis 10, **dadurch gekennzeichnet, daß** der Motor (81) ein Elektromotor, ein pneumatischer oder ein hydraulischer Motor ist.
